# EUROPEAN PATENT APPLICATION

(11) **EP 4 451 427 A1**
(43) Date of publication of application: **23.10.2024**
(21) Application number: 23787552.1
(22) Date of filing: 04.04.2023
(51) Int. Cl.: H01M 10/615, H01M 10/658

(54) **ENERGY STORAGE PREFABRICATED BOX AND BATTERY SWAPPING STATION**

(30) Priority: 14.04.2022 CN 202220862317 U
(71) Applicant: Contemporary Amperex Technology Co., Limited, Jiaocheng District Ningde Fujian 352100 (CN)
(72) Inventor: ZHENG, Chenling, Ningde, Fujian 352100 (CN); LIU, Yue, Ningde, Fujian 352100 (CN); WANG, Zengzhong, Ningde, Fujian 352100 (CN)
(74) Representative: Jacob, Reuben Ellis
(86) International application number: PCT/CN2023/086094
(87) International publication number: WO 2023/197907

(57) **Abstract**

Embodiments of the present application provide an energy storage prefabricated box and a battery swapping station. The energy storage prefabricated box includes: a battery compartment including a first wall, the first wall having a cavity structure; and a thermal insulation member disposed in the cavity structure, the thermal insulation member including at least one layer of thermal insulation bags, the thermal insulation bags each being filled with a filler, the at least one layer of thermal insulation bags being arranged in a first direction, each layer of thermal insulation bags extending in a plane perpendicular to the first direction, the at least one layer of thermal insulation bags being used for blocking heat transmission in the first direction, and the first direction being a thickness direction of the first wall. According to the energy storage prefabricated box of the present application, by providing at least one layer of thermal insulation bags in the cavity structure of the first wall of the battery compartment, heat transmission in the first direction can be blocked, thereby ensuring the thermal insulation performance of the energy storage prefabricated box.

## Description

The present application claims priority to Chinese Patent Application No. 202220862317.6, filed with the China National Intellectual Property Administration on April 14, 2022, and entitled "ENERGY STORAGE PREFABRICATED BOX AND BATTERY SWAPPING STATION", which is incorporated herein by reference in its entirety.

### Technical Field

Embodiments of the present application relate to the technical field of energy storage, and in particular to an energy storage prefabricated box and a battery swapping station.

### Background Art

With the great development of new energy technology, a variety of technologies related to energy storage have gradually been emphasized. The use of an energy storage prefabricated box for battery storage has a wide range of applications. In order to ensure the performance of a battery stored in the energy storage prefabricated box, the design related to thermal insulation of the energy storage prefabricated box is very important. Therefore, how to ensure the thermal insulation performance of the energy storage prefabricated box is an urgent technical problem to be solved.

### Summary of the Invention

The present application provides an energy storage prefabricated box and a battery swapping station. The energy storage prefabricated box has a good thermal insulation performance.

In a first aspect, the present application provides an energy storage prefabricated box, including: a battery compartment including a first wall, the first wall having a cavity structure; and a thermal insulation member disposed in the cavity structure, the thermal insulation member including at least one layer of thermal insulation bags, the thermal insulation bags each being filled with a filler, the at least one layer of thermal insulation bags being arranged in a first direction, each layer of thermal insulation bags extending in a plane perpendicular to the first direction, the at least one layer of thermal insulation bags being used for blocking heat transmission in the first direction, and the first direction being a thickness direction of the first wall.

According to the energy storage prefabricated box of the present application, by providing at least one layer of thermal insulation bags in the cavity structure of the first wall of the battery compartment, heat transmission in the first direction can be blocked, thereby ensuring the thermal insulation performance of the energy storage prefabricated box.

In some embodiments, the thermal insulation member is connected to an inner surface of the cavity structure that is parallel to the first direction.

In this way, heat transmitted in at least the first direction can be blocked by the thermal insulation member, ensuring the thermal insulation performance of the energy storage prefabricated box.

In some embodiments, the thermal insulation member is also connected to an inner surface of the cavity structure that is perpendicular to the first direction.

In this way, the thermal insulation member has a fixed position in the cavity structure and can block heat transmission in different directions, further ensuring the thermal insulation performance of the energy storage prefabricated box.

In some embodiments, each layer of thermal insulation bags of the at least one layer of thermal insulation bags includes a plurality of thermal insulation bags arranged in a second direction, the second direction being perpendicular to the first direction.

The plurality of thermal insulation bags arranged in the second direction can effectively block heat transmission in the second direction, thereby further improving the thermal insulation performance of the energy storage prefabricated box in the second direction on the basis of ensuring the thermal insulation performance of the energy storage prefabricated box in the first direction. Therefore, the overall thermal insulation performance of the energy storage prefabricated box can be ensured.

In some embodiments, each layer of thermal insulation bags of the at least one layer of thermal insulation bags includes a plurality of thermal insulation bags arranged in a third direction, the first direction, the second direction and the third direction being perpendicular to each other.

In this way, heat transmission in various directions can be blocked, and convective heat transfer in the cavity structure can be reduced, so that the thermal insulation performance of the energy storage prefabricated box can be ensured.

In some embodiments, the plurality of thermal insulation bags have the same shape, and each of the thermal insulation bags has a smaller dimension in the first direction than in the second direction.

In this way, more layers of thermal insulation bags can be arranged in the first direction, which can block heat transmission in the first direction as much as possible, thereby improving the thermal insulation performance of the energy storage prefabricated box.

In some embodiments, the thermal insulation bag is a gas bag, and the filler is a gas.

Filling the thermal insulation bag with a gas can improve the thermal insulation performance of the energy storage prefabricated box, and the gas bag can also reduce convective heat transfer in the cavity structure, thus blocking heat transmission between the inside and the outside of the energy storage prefabricated box. In addition, while realizing thermal insulation, filling the gas bag with a gas can also greatly reduce the mass of the energy storage prefabricated box, facilitating the transportation and installation of the energy storage prefabricated box.

In some embodiments, a first gas is filled in the thermal insulation bag, a second gas is filled between the thermal insulation bag and the cavity structure, and the first gas is different from the second gas.

The thermal insulation bag can be filled with a suitable gas according to different needs, such as nitrogen, to further reduce the overall mass of the energy storage prefabricated box. Moreover, the filled gas is also conducive to blocking heat transmission, ensuring the thermal insulation performance of the energy storage prefabricated box.

In some embodiments, the thermal insulation bag is cylindrical.

In a plane where the cross-sections of the cylindrical thermal insulation bags are located, the contact area between adjacent cylindrical thermal insulation bags is small, which is conducive to blocking heat transmission in the first direction and the second direction, ensuring the thermal insulation performance of the energy storage prefabricated box.

In some embodiments, the first wall is provided with a pressure relief mechanism.

The pressure relief mechanism disposed on the first wall can be actuated to release the internal pressure or temperature of the energy storage prefabricated box when the internal pressure or temperature reaches a preset threshold, thus avoiding serious accidents such as explosions, and ensuring the safety performance of the energy storage prefabricated box while taking thermal insulation measures for the energy storage prefabricated box.

In some embodiments, the first wall includes a first sub-wall and a second sub-wall, the first sub-wall is an inner wall of the battery compartment, the second sub-wall is parallel to the first sub-wall and is located on a side of the first sub-wall away from the inside of the battery compartment, and the pressure relief mechanism is a weakened portion provided on the first sub-wall and/or the second sub-wall.

The sub-wall of the first wall is provided with the pressure relief mechanism, so that the first wall can have both functions of thermal insulation and pressure release, which can provide the thermal insulation for the battery compartment when the internal pressure and temperature of the battery compartment are within a normal range, thus ensuring the stability of the operating environment of a battery in the battery compartment; and allow the internal pressure or temperature of the battery compartment to release via the pressure relief mechanism when the internal pressure and temperature are abnormal, thus ensuring the safety performance of the energy storage prefabricated box.

In some embodiments, the battery compartment includes a plurality of first walls, the plurality of first walls enclosing an accommodating space for accommodating a battery.

In this way, the thermal insulation for the battery compartment can be improved in various directions, so that the battery in the battery compartment is always in a relatively stable operating environment, which is conducive to prolonging the battery life.

In some embodiments, a second wall is also provided on a side of the first wall away from the battery compartment, and a corrugated plate is disposed between the first wall and the second wall.

The corrugated plate can increase the strength of the first wall, support the first wall, and protect the first wall against damage, and can further improve the safety performance of the energy storage prefabricated box while ensuring the thermal insulation performance of the energy storage prefabricated box.

In a second aspect, the present application provides a battery swapping station, including an energy storage prefabricated box as described in the foregoing embodiments.

### Brief Description of the Drawings

To more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without involving any inventive effort.
FIG. 1 is a schematic diagram of the outline of an energy storage prefabricated box according to an embodiment of the present application;
FIG. 2 is a schematic diagram of an internal structure of an energy storage prefabricated box according to an embodiment of the present application;
FIG. 3 is a schematic enlarged structural diagram of part M in FIG. 2;
FIG. 4 is a schematic structural diagram of a first wall according to an embodiment of the present application;
FIG. 5 is a schematic structural diagram of a first wall according to another embodiment of the present application;
FIG. 6 is a schematic structural diagram of a first wall according to another embodiment of the present application; and
FIG. 7 is a schematic structural diagram of a part of an energy storage prefabricated box according to an embodiment of the present application.

### Reference signs in the Detailed Description of Embodiments:

100: energy storage prefabricated box;
210: battery compartment, 211: first wall, 212: first sub-wall, 213: second sub-wall, 214: second wall, 215: corrugated plate, 216: pressure relief mechanism;
220: thermal insulation member, 221: thermal insulation bag.

### Detailed Description of Embodiments

The technical solutions in embodiments of the present application will be described below with reference to the accompanying drawings.

In the description of the present application, it should be noted that "a plurality of' means two or more, unless otherwise specified. The orientation or position relationship indicated by the terms "upper", "lower", "left", "right", "inner", "outer", etc. is only for the convenience of describing the present application and simplifying the description, rather than indicating or implying that the device or element referred to must have a particular orientation or be constructed and operated in a particular orientation, and therefore should not be construed as a limitation on the present application. In addition, the terms "first", "second", "third", etc. are merely for descriptive purposes, and should not be construed as indicating or implying the relative importance. The term "perpendicular" does not mean being perpendicular in the strict sense, but within an allowable range of tolerance. The term "parallel" does not mean being parallel in the strict sense, but within an allowable range of tolerance.

The orientation terms in the following description all indicate directions shown in the accompanying drawings, and do not limit the specific structure in the present application. In the description of the present application, it should also be noted that the terms "mounting", "connecting", and "connection" should be interpreted in the broad sense unless explicitly defined and limited otherwise. For example, the connection may be a fixed connection, a detachable connection, or an integral connection, or may be a direct connection, or an indirect connection by means of an intermediate medium. For those of ordinary skill in the art, the specific meanings of the terms mentioned above in the present application can be construed according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include/comprise" and "has/have" and any variations thereof in the description and the claims of the present application as well as the brief description of the accompanying drawings described above are intended to cover non-exclusive inclusion. The terms "first", "second", etc. in the description and the claims of the present application as well as the foregoing drawings are used to distinguish different objects, rather than describing a specific order or a primary-secondary relationship.

The phrase "embodiment" mentioned in the present application means that the specific features, structures and characteristics described with reference to the embodiment may be encompassed in at least one embodiment of the present application. The phrase at various locations in the description does not necessarily refer to the same embodiment, or an independent or alternative embodiment exclusive of another embodiment. Those skilled in the art should understand explicitly or implicitly that the embodiments described in the present application can be combined with other embodiments.

An energy storage prefabricated box is an energy storage apparatus with a relatively high degree of integration. Specifically, the energy storage prefabricated box may include a battery compartment. Components such as a plurality of batteries, a master control component, a busbar component, and a thermal management component may be arranged in the battery compartment.

A battery may be referred to as a battery box including a box body and one or more battery cells packaged in the box body. Optionally, the battery cell may include a lithium ion secondary battery, a lithium ion primary battery, a lithium-sulfur battery, a sodium-lithium ion battery, a sodium ion battery or a magnesium ion battery, etc., which is not limited in the embodiments of the present application. The battery cell may be cylindrical, flat, cuboid or in another shape, which is not limited in the embodiments of the present application.

Optionally, the plurality of batteries arranged in the battery compartment may be in series connection, in parallel connection, or in series-parallel connection. In some implementations, the plurality of batteries may be connected to the master control component via the busbar component, and an electric connection between the plurality of batteries is realized via the master control component.

In addition to the plurality of batteries, the master control component, and the busbar component, the energy storage prefabricated box may further include a thermal management component. The thermal management component includes, but is not limited to, an air conditioner assembly, a fan assembly, a water-cooled pipe, etc., which may be used for thermal management on the inside of the energy storage prefabricated box to adjust the internal temperature of the energy storage prefabricated box.

In addition, for a battery, its performance is closely related to the ambient temperature. For example, if the ambient temperature is too high, it will increase the risk of battery failure and explosion; if the ambient temperature is too low, it will affect the electrochemical reaction inside the battery, thus affecting the normal operation and service life of the battery. Therefore, in order to avoid great impact on the internal temperature of the energy storage prefabricated box caused by changes in the external environment, the energy storage prefabricated box for battery storage needs to have a good thermal insulation performance, so as to reduce the impact on the battery caused by the changes in the external environment and ensure the performance of the battery.

In the existing energy storage prefabricated box, surfaces of the battery compartment are generally covered with rock wool to minimize heat exchange between the inside and the outside of the battery compartment. However, when the battery compartment has a large size, more rock wool is needed, which increases the overall mass of the energy storage prefabricated box and is not conducive to the transportation and installation of the energy storage prefabricated box. When the rock wool is connected to each other by means of steel plates with angle irons, the mass of the energy storage prefabricated box can be further increased.

In view of the above, the present application provides an energy storage prefabricated box. A first wall of the battery compartment has a cavity structure, and a thermal insulation member is disposed in the cavity structure to insulate the battery compartment. The thermal insulation member includes at least one layer of thermal insulation bags each filled with a filler. The thermal insulation bags are filled in the cavity structure, and can block heat transmission between the inside and the outside of the energy storage prefabricated box to ensure the thermal insulation performance of the energy storage prefabricated box.

The technical solutions described in the embodiments of the present application are applicable to energy storage prefabricated boxes in various types and sizes. For example, the energy storage prefabricated box may be a standard 40-foot or 20-foot container, or a specific container with customized dimensions. The battery accommodated in the energy storage prefabricated box includes, but is not limited to, a lithium battery, such as a lithium iron phosphate battery, a lithium manganate battery or a lithium cobaltate battery.

The energy storage prefabricated box is suitable for various scenarios. For example, the energy storage prefabricated box can be placed in a battery swapping station to provide a storage space for batteries in the station. When the energy storage prefabricated box is connected to a charging device, the batteries stored in the energy storage prefabricated box can be charged. For another example, the energy storage prefabricated box may be used with a power generation device (wind power generator, hydroelectric generator, etc.), and power generated by the power generation device may be stored in the batteries stored in the energy storage prefabricated box.

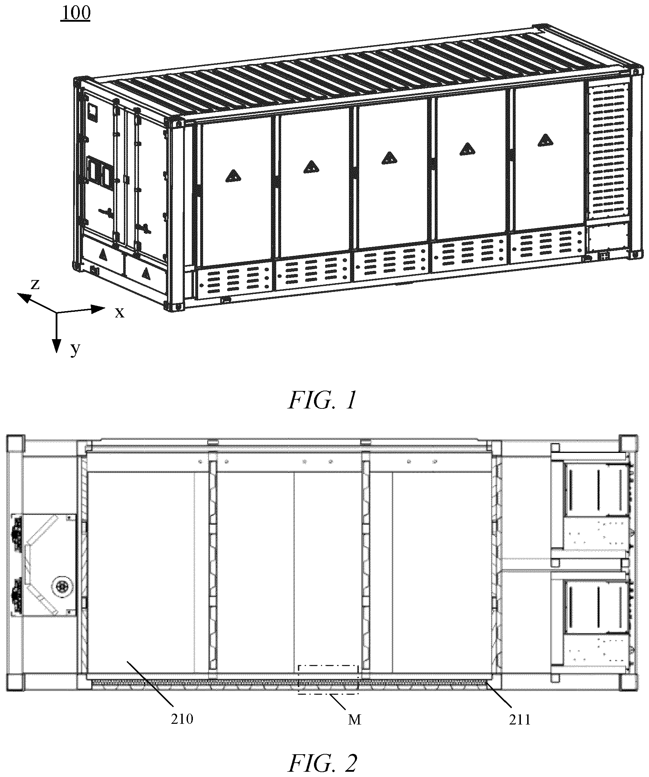

FIG. 1 shows a schematic diagram of the outline of an energy storage prefabricated box 100 according to an embodiment of the present application.

As shown in FIG. 1, the energy storage prefabricated box 100 may be of a regular cuboid structure, which facilitates fixed placement and transportation of the energy storage prefabricated box 100. The energy storage prefabricated box 100 has an internal hollow structure, and the hollow structure may include a battery compartment for accommodating a plurality of batteries in the battery compartment. Furthermore, in addition to the battery compartment, the inside of the energy storage prefabricated box 100 may be divided into a plurality of functional compartments according to actual needs. Each functional compartment is provided with other functional device components for managing or assisting in the operation of the plurality of batteries, such as a busbar component, a master control component, and a thermal management component.

With continued reference to FIG. 1, in this embodiment of the present application, three directions are defined based on the cuboid-type energy storage prefabricated box 100, and six sides of the cuboid are six outer walls of the energy storage prefabricated box 100. Specifically, as shown in FIG. 1, x may be a length direction of the energy storage prefabricated box 100, and, for two of the six outer walls of the energy storage prefabricated box 100 that are perpendicular to this length direction x, they are referred to as a front wall and a back wall in sequence; y may be a height direction of the energy storage prefabricated box 100, and, for two of the six outer walls of the energy storage prefabricated box 100 that are perpendicular to that height direction y, they are referred to as a top wall and a bottom wall in sequence; and z may be a width direction of the energy storage prefabricated box 100, and, for two of the six outer walls of the energy storage prefabricated box 100 that are perpendicular to that width direction z, they are referred to as a right wall and a left wall in sequence.

The top wall and bottom wall, perpendicular to the height direction y, of the six outer walls of the energy storage prefabricated box 100 may be oriented in a direction opposite gravity and a direction of gravity, respectively. Thus, except the top wall and the bottom wall that are not suitable to be provided with a door of the energy storage prefabricated box 100, any one or more of the front wall, the back wall, the left wall, or the right wall of the energy storage prefabricated box 100 may be provided with a door of the energy storage prefabricated box 100, allowing a user to access the energy storage prefabricated box 100 to manage the components therein.

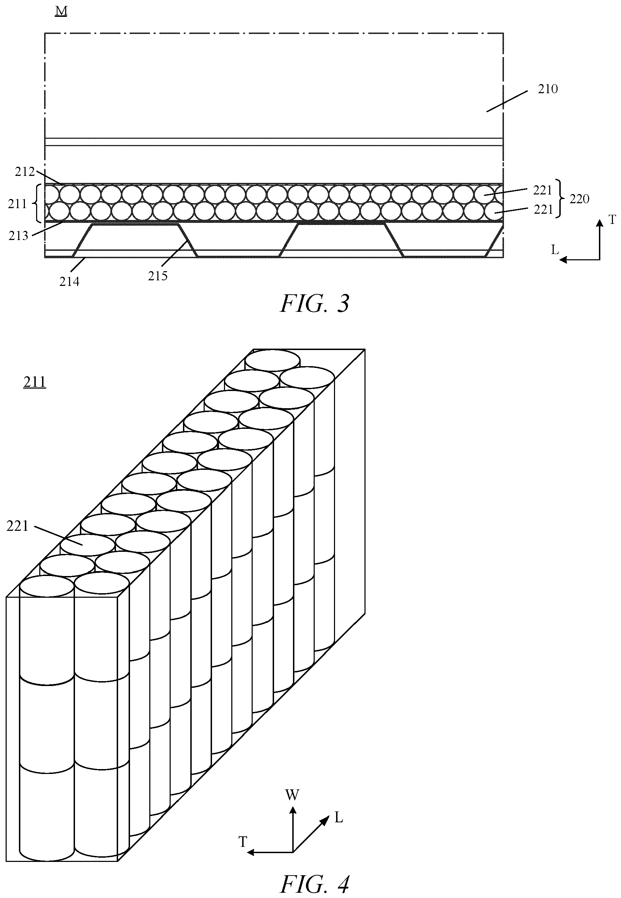

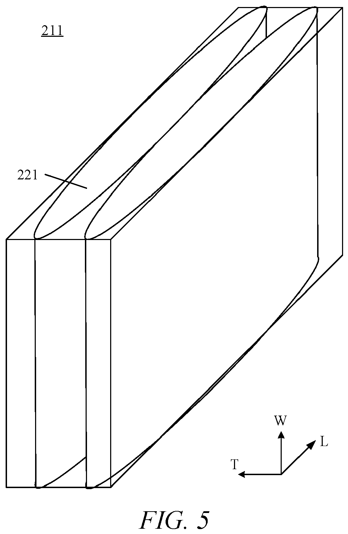

FIG. 2 is a schematic diagram of an internal structure of an energy storage container 100 according to an embodiment of the present application, showing a schematic diagram of a cross-section of the energy storage prefabricated box 100 in the plane of the length direction x and the width direction y. In order to more clearly illustrate the structure of a first wall 211 of the energy storage prefabricated box 100, FIG. 3 shows a schematic enlarged structural diagram of part M in FIG. 2. In addition, the structure of the energy storage container provided in the embodiments of the present application is described in conjunction with FIGS. 4 and 5.

The energy storage prefabricated box 100 provided in the embodiments of the present application includes a battery compartment 210 and a thermal insulation member 220. The battery compartment 210 includes a first wall 211, the first wall 211 having a cavity structure. The thermal insulation member 220 is disposed in the cavity structure. The thermal insulation member 220 includes at least one layer of thermal insulation bags 221. The thermal insulation bags 221 each is filled with a filler. The at least one layer of thermal insulation bags 221 is arranged in a first direction T. Each layer of thermal insulation bags 221 extends in a plane perpendicular to the first direction T. The at least one layer of thermal insulation bags 221 is used for blocking heat transmission in the first direction T. The first direction T is a thickness direction of the first wall 211.

The battery compartment 210 is used for accommodating a battery, and components such as a master control component, a busbar component, and a thermal management component may be disposed in the battery compartment. In some possible implementations, the battery compartment 210 may accommodate only the battery, and other components are disposed in other compartments, for example, an electrical compartment, etc. The other compartments are disposed around the battery compartment 210 and are used for controlling and managing the battery in the battery compartment 210. The battery compartment 210 may include a plurality of walls enclosing an accommodating space in which the battery is accommodated.

The first wall 211 may be any one of the plurality of walls, and the first wall 211 has a cavity structure.

The thermal insulation member 220 is accommodated in the cavity structure of the first wall 211 and provides the thermal insulation for the battery compartment 210. The thermal insulation member 220 includes at least one layer of thermal insulation bags 221 arranged in the first direction T. Each layer of thermal insulation bags 221 may include at least one thermal insulation bag 221, for example, a layer of thermal insulation bags 221 may include a plurality of thermal insulation bags 221 as shown in FIGS. 3 and 4, or a layer of thermal insulation bags 221 may include only one thermal insulation bag 221 as shown in FIG. 5. In a possible implementation, a layer of thermal insulation bags 221 is disposed in the middle of the cavity structure in the first direction T. The layer of thermal insulation bags 221 is not in contact with two surfaces in the cavity structure that are perpendicular to the first direction T. The layer of thermal insulation bags 221 divides the cavity structure into three parts in the first direction T. This is equivalent to the situation where three layers of thermal insulation bags 221 are disposed in the cavity structure, that is, it can be considered that three layers of thermal insulation bags 221 are disposed in the cavity structure. The more layers of the thermal insulation bags 221 in the first direction T lead to the better thermal insulation performance in the first direction T.

Each layer of thermal insulation bags 221 extends in the plane perpendicular to the first direction T, such that heat needs to pass through at least one layer of thermal insulation bags 221 when being transmitted between a side of the first wall 211 facing the inside of the energy storage prefabricated box 100 and a side of the first wall 211 facing away from the inside of the energy storage prefabricated box 100, making it difficult to quickly transmit heat.

The number and shape of thermal insulation bags 221 of each layer are not limited in the embodiments of the present application. The number of thermal insulation bags 221 of different layers may be the same or different. For example, it is possible that one of the layers of thermal insulation bags 221 includes only one thermal insulation bag 221, and another layer of thermal insulation bags 221 includes a plurality of thermal insulation bags 221. Different thermal insulation bags 221 may have the same or different shapes. For example, it is possible that the thermal insulation bags 221 in the same layer have the same shape and the thermal insulation bags 221 in different layers have different shapes, or the thermal insulation bags 221 in the same layer have different shapes. The thermal insulation bag 221 may be in the shape of a cylinder, a rounded cube, or in another irregular three-dimensional shape.

Several possible structures of the thermal insulation member 220 are shown in FIGS. 4 and 5. For example, the thermal insulation member 220 shown in FIG. 4 includes two layers of thermal insulation bags 221, each layer of thermal insulation bags 221 includes one thermal insulation bag 221, and the thermal insulation bag 221 has an irregular three-dimensional shape. As another example, the thermal insulation member 220 shown in FIG. 5 includes two layers of thermal insulation bags 221 arranged in the first direction T, and each layer of thermal insulation bags 221 includes a plurality of columns of thermal insulation bags 221 in a second direction L, and a plurality of rows of thermal insulation bags 221 in a third direction W. The shapes of the thermal insulation bags 221 shown in FIGS. 4 and 5 are examples only. The thermal insulation bags 221 may slightly deform when the thermal insulation bags 221 are filled with fillers.

The thermal insulation bag 221 is filled with a filler which may be a gas, a liquid, a colloid, a solid, etc. The filler is used for blocking heat transmission between two sides of the first wall 211, and accordingly the filler is required to have a lower thermal conductivity. Moreover, in order to reduce the overall mass of the box body, the filler may also be required to have a lower density. For example, the filler may be air.

When heat is transmitted between the two sides of the first wall 211 in the first direction T, the filler in the thermal insulation bag 221 can have an effect of blocking, while the thermal insulation bag 221 itself can slow down convective heat transfer in the first direction T. Especially when the thermal insulation bag 221 is filled with a gas, providing the thermal insulation bag 221 can slow down convective heat transfer of the gas in the cavity structure in the first direction T, thereby blocking heat transmission in the first direction T and improving the thermal insulation performance provided by the first wall 211 for the energy storage prefabricated box 100.

According to the energy storage prefabricated box 100 of the present application, by providing at least one layer of thermal insulation bags 221 in the cavity structure of the first wall 211 of the battery compartment 210, heat transmission in the first direction T can be blocked, thereby ensuring the thermal insulation performance of the energy storage prefabricated box 100.

According to some embodiments of the present application, optionally, the thermal insulation member 220 is connected to an inner surface of the cavity structure that is parallel to the first direction T.

The thermal insulation member 220 can block heat transmission in the first direction T in the cavity structure of the first wall 211, and accordingly, in order to ensure that each location on the first wall 211 is effective in blocking heat transmission in the first direction T, the thermal insulation member 220 may be filled in the cavity structure and is connected to the inner surface of the cavity structure that is parallel to the first direction T. Considering that surfaces of the first wall 211 that are perpendicular to the second direction L and the third direction W do not affect heat transmission between the inside and the outside of the energy storage prefabricated box 100, it is not necessary to limit the thermal insulation member 220 to be connected to the inner surface perpendicular to the first direction T.

In this way, heat transmission in at least the first direction T can be blocked by the thermal insulation member 220, ensuring the thermal insulation performance of the energy storage prefabricated box 100.

According to some embodiments of the present application, optionally, the thermal insulation member 220 is also connected to an inner surface of the cavity structure that is perpendicular to the first direction T.

The thermal insulation member 220 may be connected to the inner surface of the cavity structure that is parallel to the first direction T, and may also be connected to the inner surface of the cavity structure that is perpendicular to the first direction T, that is, the thermal insulation member 220 may be connected to all the inner surfaces of the cavity structure. The connection may be a fixed connection, that is, the thermal insulation member 220 is fixed in the cavity structure by the connection between the thermal insulation member 220 and the inner surfaces of the cavity structure. The connection may also be a contact between the thermal insulation member 220 and the inner surfaces of the cavity structure, that is, the position of the thermal insulation member 220 in the cavity structure is fixed by means of tightly filling.

In this way, the thermal insulation member 220 has a fixed position in the cavity structure and can block heat transmission in different directions, further ensuring the thermal insulation performance of the energy storage prefabricated box 100.

According to some embodiments of the present application, optionally, each layer of thermal insulation bags 221 of the at least one layer of thermal insulation bags 221 includes a plurality of thermal insulation bags 221 arranged in a second direction L, the second direction L being perpendicular to the first direction T.

In the case where the number of thermal insulation bags 221 provided in the second direction L is greater than the number of layers of thermal insulation bags 221 provided in the first direction T, the thermal insulation performance of the first wall 211 for the energy storage prefabricated box 100 in the second direction L can be improved. Considering that heat transmission in the second direction L has less impact on heat transmission between the inside and the outside of the energy storage prefabricated box 100, the number of thermal insulation bags 221 provided in the second direction L may be less than or equal to the number of layers of thermal insulation bags 221 provided in the first direction T, so as to reduce the cost for use of the thermal insulation bags 221.

The plurality of thermal insulation bags 221 arranged in the second direction L can effectively block heat transmission in the second direction L, further improving the thermal insulation performance of the energy storage prefabricated box 100 in the second direction L on the basis of ensuring the thermal insulation performance of the energy storage prefabricated box 100 in the first direction T. Therefore, the overall thermal insulation performance of the energy storage prefabricated box 100 can be ensured.

According to some embodiments of the present application, optionally, each layer of thermal insulation bags 221 of the at least one layer of thermal insulation bags 221 includes a plurality of thermal insulation bags 221 arranged in a third direction W, the first direction T, the second direction L and the third direction W being perpendicular to each other.

As shown in FIG. 4, by providing a plurality of thermal insulation bags 221 in the first direction T, the second direction L, and the third direction W, respectively, heat transmission in all these three directions can be blocked. Moreover, the thermal insulation bags 221 can be closely arranged. Taking FIGS. 3 and 4 as an example, when the cross-section of each thermal insulation bag 221 in the plane of the first direction T and the second direction L is circular, the thermal insulation bag 221 can be disposed in a gap formed between two adjacent thermal insulation bags 221 in the second direction L. In this way, the plurality of thermal insulation bags 221 can be closely arranged, and the thermal insulation bags 221 can fill the cavity structure to the utmost extent.

In this way, heat transmission in various directions can be blocked, and convective heat transfer in the cavity structure can be reduced, so that the thermal insulation performance of the energy storage prefabricated box 100 can be ensured.

According to some embodiments of the present application, optionally, the plurality of thermal insulation bags 221 have the same shape, and each of the thermal insulation bags 221 has a smaller dimension in the first direction T than in the second direction L.

The first direction T is the thickness direction of the first wall 211, and is the main direction for heat transmission between the inside and the outside of the energy storage prefabricated box 100. Generally, the requirements for the thermal insulation performance in the first direction T are much higher than the requirements for the thermal insulation performance in the second direction L and the third direction W. In order to ensure the thermal insulation performance of the first wall 211 in the first direction T as much as possible, more thermal insulation bags 221 can be provided in the first direction T of the cavity structure, and fewer thermal insulation bags 221 can be appropriately provided in the second direction L or the third direction W, which can save costs while ensuring the thermal insulation performance. Accordingly, in the design of the thermal insulation bags 221, each thermal insulation bag 221 has a smaller dimension in the first direction T than in the second direction L, allowing more thermal insulation bags 221 to be arranged in the first direction T and fewer thermal insulation bags 221 to be arranged in the second direction L or the third direction W.

In this way, more layers of thermal insulation bags 221 can be arranged in the first direction T, which can block heat transmission in the first direction T as much as possible, thereby improving the thermal insulation performance of the energy storage prefabricated box 100.

According to some embodiments of the present application, optionally, the thermal insulation bag 221 is a gas bag, and the filler is a gas.

Gases tend to have a lower thermal conductivity, especially air, which has a thermal conductivity of only 0.0267 W/m-K, making it a better thermal insulation material. Therefore, the thermal insulation bag 221 may be a gas bag, and the filler in the thermal insulation bag 221 may be a gas.

Filling the thermal insulation bag 221 with a gas can improve thermal insulation performance of the energy storage prefabricated box 100, and the gas bag can also reduce convective heat transfer in the cavity structure, thus blocking heat transmission between the inside and the outside of the energy storage prefabricated box 100. In addition, while realizing thermal insulation, filling the gas bag with a gas can also greatly reduce the mass of the energy storage prefabricated box 100, facilitating the transportation and installation of the energy storage prefabricated box 100.

According to some embodiments of the present application, optionally, a first gas is filled in the thermal insulation bag 221, a second gas is filled between the thermal insulation bag 221 and the cavity structure, and the first gas is different from the second gas.

In a possible implementation, the first gas may be nitrogen, and the second gas may be air. That is, in production of the thermal insulation bags 221, the thermal insulation bags 221 may be filled with nitrogen and sealed, and the thermal insulation bags 221 filled with nitrogen are placed in the cavity structure according to a certain arrangement, and the part of the cavity structure other than the space occupied by the thermal insulation bags 221 and the gas inside the thermal insulation bags 221 is filled with air. In some implementations, the thermal insulation bags 221 may be filled with different gases as needed. For example, filling with nitrogen can further reduce the overall mass of the energy storage prefabricated box 100.

The thermal insulation bags 221 can be filled with a suitable gas according to different needs, such as nitrogen, to further reduce the overall mass of the energy storage prefabricated box 100. Moreover, the filled gas is also conducive to blocking heat transmission, ensuring the thermal insulation performance of the energy storage prefabricated box 100.

According to some embodiments of the present application, optionally, the thermal insulation bag 221 is cylindrical.

For ease of production, the thermal insulation bag 221 may have a regular shape, such as a cylinder. FIG. 4 shows one possible arrangement of the cylindrical thermal insulation bags 221. In the first direction T and the second direction L, lateral sides of the cylinders are arranged tangentially; and in the third direction W, end faces of the cylinders are in contact with each other.

In a plane where the cross-sections of the cylindrical thermal insulation bags 221 are located, the contact area between adjacent cylindrical thermal insulation bags 221 is small, which is conducive to blocking heat transmission in the first direction T and the second direction L, ensuring the thermal insulation performance of the energy storage prefabricated box 100.

According to some embodiments of the present application, optionally, the first wall 211 is provided with a pressure relief mechanism 216.

During operation of the battery in the energy storage prefabricated box 100, changes in pressure or temperature may occur due to the chemical reaction within the battery, and the changes may also affect the internal pressure or temperature of the energy storage prefabricated box 100. In order to avoid safety hazards due to excessive changes in the internal pressure or temperature of the energy storage prefabricated box 100, the energy storage prefabricated box 100 is usually provided with the pressure relief mechanism 216.

The pressure relief mechanism 216, which may generally be arranged on a battery cell or a box body, refers to an element or component that is actuated to release the internal pressure or temperature of the corresponding component when the internal pressure or temperature reaches a preset threshold. When the pressure relief mechanism 216 on the battery cell is actuated, the high-temperature and high-pressure substance inside the battery cell is released into the box body via the pressure relief mechanism 216 on the battery cell. Further, when the internal pressure or temperature of the box body reaches the preset threshold, the pressure relief mechanism 216 on the box body may also be actuated, and the high-temperature and high-pressure substance from the inside of the battery cell is released into the battery compartment 210 via the pressure relief mechanism 216 on the box body.

According to the foregoing implementations, although the safety performance of the battery can be ensured to a certain extent, when the pressure relief mechanism 216 on the box body of the battery is actuated, the high-temperature and high-pressure substance from the inside of the battery cell will enter the battery compartment 210 in the energy storage prefabricated box 100, leading to a certain safety hazard in the battery compartment 210. Since the thermal insulation member 220 is provided on the wall of the battery compartment 210 of the energy storage prefabricated box 100, it is difficult to quickly dissipate heat from the inside of the energy storage prefabricated box 100. Therefore, it is necessary to provide the pressure relief mechanism 216 on the first wall 211 of the energy storage prefabricated box 100 to ensure the safety performance of the energy storage prefabricated box 100.

The pressure relief mechanism 216 disposed on the first wall 211 can be actuated to release the internal pressure or temperature of the energy storage prefabricated box 100 when the internal pressure or temperature reaches a preset threshold, thus avoiding serious accidents such as explosions, and ensuring the safety performance of the energy storage prefabricated box 100 while taking thermal insulation measures for the energy storage prefabricated box 100.

According to some embodiments of the present application, optionally, the first wall 211 includes a first sub-wall 212 and a second sub-wall 213, the first sub-wall 212 is an inner wall of the battery compartment 210, the second sub-wall 213 is parallel to the first sub-wall 212 and is located on a side of the first sub-wall 212 away from the inside of the battery compartment 210, and the pressure relief mechanism 216 is a weakened portion provided on the first sub-wall 212 and/or the second sub-wall 213.

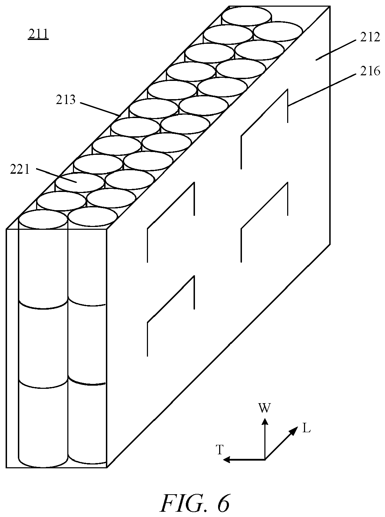

FIG. 6 shows a structure of a first wall 211 provided with a pressure relief mechanism 216. As shown in FIG. 6, the first wall 211 includes a first sub-wall 212 and a second sub-wall 213, the first sub-wall 212 and the second sub-wall 213 are arranged parallel to and spaced apart from each other, and a space therebetween is a cavity structure for accommodating the thermal insulation member 220. The first sub-wall 212 is an inner wall of the battery compartment 210 and is in direct contact with the inside of the battery compartment 210, and the second sub-wall 213 is located on a side of the first sub-wall 212 away from the inside of the battery compartment 210. As can be seen in FIG. 6, the first sub-wall 212 is provided with one or more pressure relief mechanisms 216. The pressure relief mechanisms 216 are disposed on the first sub-wall 212 in the form of weakened portions, which may be, for example, indentations. The second sub-wall 213 may also be provided with pressure relief mechanisms 216 in the same manner. When the internal pressure or temperature of the energy storage prefabricated box 100 reaches a preset threshold, the pressure relief mechanisms 216 on the first sub-wall 212 may rupture from weak points, to release the internal pressure or temperature into the cavity structure. If the internal pressure or temperature of the energy storage prefabricated box 100 cannot be released fully in this way, the internal pressure or temperature of the energy storage prefabricated box 100 can be further released by means of the pressure relief mechanisms 216 on the second sub-wall 213.

The sub-wall of the first wall 211 is provided with the pressure relief mechanism 216, so that the first wall 211 can have both functions of thermal insulation and pressure release, which can provide the thermal insulation for the battery compartment 210 when the internal pressure and temperature of the battery compartment 210 are within a normal range, thus ensuring the stability of the operating environment of a battery in the battery compartment 210; and allow the internal pressure or temperature of the battery compartment 210 to release via the pressure relief mechanism 216 when the internal pressure and temperature are abnormal, thus ensuring the safety performance of the energy storage prefabricated box 100.

According to some embodiments of the present application, optionally, the battery compartment 210 includes a plurality of first walls 211, the plurality of first walls 211 enclosing an accommodating space for accommodating a battery.

The first wall 211 of the battery compartment 210 is provided with the thermal insulation member 220, which can insulate the battery compartment 210. In some implementations, the first wall 211 of the battery compartment 210 may also be provided with the pressure relief mechanism 216 to improve the safety performance of the energy storage prefabricated box 100. Accordingly, a plurality of walls in the battery compartment 210 can be constructed as the first walls 211, e.g., the walls enclosing the battery compartment 210 may all be constructed as the first walls 211. The plurality of first walls 211 enclosing an accommodating space for accommodating a battery can provide a thermal insulation effect for the battery accommodated in the accommodating space.

In this way, the thermal insulation for the battery compartment 210 can be improved in various directions, so that the battery in the battery compartment 210 is always in a relatively stable operating environment, which is conducive to prolonging the battery life.

According to some embodiments of the present application, optionally, a second wall 214 is also provided on a side of the first wall 211 away from the battery compartment 210, and a corrugated plate 215 is disposed between the first wall 211 and the second wall 214.

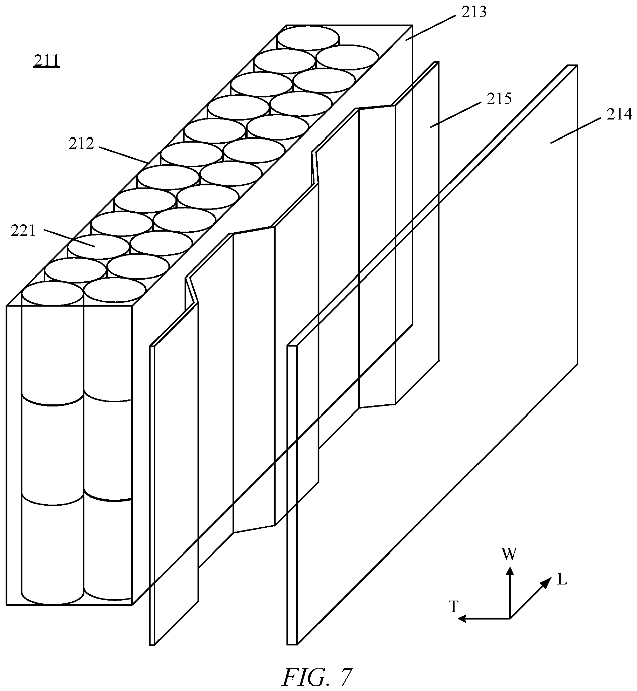

FIG. 7 shows a schematic structural diagram of a part of the energy storage prefabricated box 100 according to an embodiment of the present application. As can be seen in FIG. 7, the second wall 214 is provided on a side of the first wall 211 away from the battery compartment 210, which can also be regarded as being provided on a side of the second sub-wall 213 away from the battery compartment 210. There is a certain space between the second wall 214 and the first wall 211, and the corrugated plate 215 is disposed in the space.

The corrugated plate 215 refers to a plate by processing a steel plate into continuous trapezoids, which can reduce the weight of the plate while increasing the rigidity of the plate. The corrugated plate 215 has a strong ability to absorb collision energy, so that the battery accommodated in the energy storage prefabricated box 100 is not easily damaged during transportation.

The corrugated plate 215 can increase the strength of the first wall 211, support the first wall 211, and protect the first wall 211 against damage, and can further improve the safety performance of the energy storage prefabricated box 100 while ensuring the thermal insulation performance of the energy storage prefabricated box 100.

The present application further provides a battery swapping station, including an energy storage prefabricated box 100 in the foregoing embodiments.

The above description is only specific embodiments of the present application, but the scope of protection of the present application is not limited thereto, and variations and replacements that can be easily conceived within the technical scope disclosed in the present application by any person skilled in the art should fall within the scope of protection of the present application. Therefore, the scope of protection of the present application shall be subject to the scope of protection of the claims.

## Claims

1. An energy storage prefabricated box, **characterized by** comprising:
a battery compartment (210) comprising a first wall (211), the first wall (211) having a cavity structure; and
a thermal insulation member (220) disposed in the cavity structure, the thermal insulation member (220) comprising at least one layer of thermal insulation bags (221), the thermal insulation bags (221) each being filled with a filler, the at least one layer of thermal insulation bags (221) being arranged in a first direction (T), each layer of thermal insulation bags (221) extending in a plane perpendicular to the first direction (T), the at least one layer of thermal insulation bags (221) being used for blocking heat transmission in the first direction (T), and the first direction (T) being a thickness direction of the first wall (211).

2. The energy storage prefabricated box according to claim 1, **characterized in that** the thermal insulation member (220) is connected to an inner surface of the cavity structure that is parallel to the first direction (T).

3. The energy storage prefabricated box according to claim 2, **characterized in that** the thermal insulation member (220) is also connected to an inner surface of the cavity structure that is perpendicular to the first direction (T).

4. The energy storage prefabricated box according to any one of claims 1 to 3, **characterized in that** each layer of thermal insulation bags (221) of the at least one layer of thermal insulation bags (221) comprises a plurality of thermal insulation bags (221) arranged in a second direction (L), the second direction (L) being perpendicular to the first direction (T).

5. The energy storage prefabricated box according to claim 4, **characterized in that** each layer of thermal insulation bags (221) of the at least one layer of thermal insulation bags (221) comprises a plurality of thermal insulation bags (221) arranged in a third direction (W), the first direction (T), the second direction (L) and the third direction (W) being perpendicular to each other.

6. The energy storage prefabricated box according to claim 4 or 5, **characterized in that** the plurality of thermal insulation bags (221) have the same shape, and each of the thermal insulation bags (221) has a smaller dimension in the first direction (T) than in the second direction (L).

7. The energy storage prefabricated box according to any one of claims 1 to 6, **characterized in that** the thermal insulation bag (221) is a gas bag, and the filler is a gas.

8. The energy storage prefabricated box according to claim 7, **characterized in that** a first gas is filled in the thermal insulation bag (221), a second gas is filled between the thermal insulation bag (221) and the cavity structure, and the first gas is different from the second gas.

9. The energy storage prefabricated box according to any one of claims 1 to 8, **characterized in that** the thermal insulation bag (221) is cylindrical.

10. The energy storage prefabricated box according to any one of claims 1 to 9, **characterized in that** the first wall (211) is provided with a pressure relief mechanism.

11. The energy storage prefabricated box according to claim 10, **characterized in that** the first wall (211) comprises a first sub-wall (212) and a second sub-wall (213), the first sub-wall (212) is an inner wall of the battery compartment (210), the second sub-wall (213) is parallel to the first sub-wall (212) and is located on a side of the first sub-wall (212) away from the inside of the battery compartment (210), and the pressure relief mechanism is a weakened portion provided on the first sub-wall (212) and/or the second sub-wall (213).

12. The energy storage prefabricated box according to any one of claims 1 to 11, **characterized in that** the battery compartment (210) comprises a plurality of first walls (211), the plurality of first walls (211) enclosing an accommodating space for accommodating a battery.

13. The energy storage prefabricated box according to any one of claims 1 to 12, **characterized in that** a second wall (214) is also provided on a side of the first wall (211) away from the battery compartment, and a corrugated plate (215) is disposed between the first wall (211) and the second wall (214).

14. A battery swapping station, **characterized by** comprising an energy storage prefabricated box according to any one of claims 1 to 13.
